# EUROPEAN PATENT APPLICATION

(11) **EP 4 344 985 A1**
(43) Date of publication of application: **03.04.2024**
(21) Application number: 22198353.9
(22) Date of filing: 28.09.2022
(51) Int. Cl.: B62D 21/15, B62D 21/02, B62D 25/20, B62D 25/02

(54) **A VEHICLE HAVING AN ENERGY ABSORBING ARRANGEMENT**

(71) Applicant: Ningbo Geely Automobile Research & Development Co. Ltd., Hangzhou Bay New District Ningbo Zhejiang 315336 (CN); Zhejiang Geely Holding Group Co., Ltd., Hangzhou, Zhejiang 310051 (CN)
(72) Inventor: BERGHOFF, Christopher, 41722 Göteborg (SE); LINDVALL, Magnus, 44441 Stenungsund (SE); GUSTAVSSON, Martin, 42353 Göteborg (SE)
(74) Representative: Zacco Sweden AB

(57) **Abstract**

The invention relates to a vehicle (1) having an energy absorbing arrangement (8). The arrangement comprises a bracket (9) and a component (10) arranged on the underside of the vehicle. The bracket (9) is arranged to transfer energy to said component (10) in case of a collision.

## Description

### TECHNICAL FIELD

The invention relates to a vehicle having an energy absorbing arrangement.

### BACKGROUND

Today's vehicles have to absorb energy in case of a collision. For example, the vehicle is suitably designed to reduce the load on an A-pillar and counteract intrusion into the passenger compartment of the vehicle in case of a crash. For this reason, the sill can be extended by a front part to secure that the initial main force will be transferred to the sill which absorbs energy before the A-pillar is affected.

The amount of energy that can be absorbed by the sill in this way is however limited. For safety reasons, it is desired to control the load distribution and absorb more energy without introducing additional components making the structure complicated or heavier.

### SUMMARY

An objective of the invention is to provide a vehicle by which vehicle more energy can be absorbed in case of a collision.

The objective is achieved by a vehicle having an energy absorbing arrangement, wherein the arrangement comprises a bracket and a component arranged on the underside of the vehicle, and wherein the bracket is arranged to transfer energy to said component in case of a collision.

The invention is based on the insight that by such a vehicle, energy absorption can be performed without using additional components. The bracket can be an already existing part of the vehicle. For example, the bracket can be a lifting bracket providing a surface for a lifting equipment enabling the vehicle to be lifted in a workshop.

Further, the component arranged on the underside of the vehicle, can be a standard component or already existing component of the vehicle. For example, the component can be part of a battery structure, such as a battery casing or a side collision protection for a battery. Such an electric battery for powering an electric motor driving the vehicle is often arranged on the underside of the vehicle.

According to one embodiment, the vehicle comprises a sill and the bracket is attached to the sill, and preferably the bracket is arranged in the front part of the sill. Hereby, the bracket can be properly attached and provide a favourable lifting position at the same time as energy can be transferred to the component in case of a crash.

According to a further embodiment, the bracket is arranged on the underside of the sill. Hereby, the bracket is positioned at a level suitable for transferring energy to a battery structure arranged on the underside of a vehicle.

According to a further embodiment, the bracket is arranged such that a front portion of the bracket is arranged in front of the sill. Hereby, in case of a crash, energy can be transferred to the component via the bracket before the sill is hit and the total energy absorption capability can be increased.

According to a further embodiment, the vehicle has an A-pillar, and the bracket is arranged such that the front portion of the bracket is arranged in front of the A-pillar. Hereby, energy can be transferred to a rear portion of the bracket and absorbed by the component while reducing the load on the A-pillar.

According to a further embodiment, the bracket is arranged in a position below the A-pillar. Hereby, the bracket has a favourable position to be connected to a front portion of a sill where the bracket can extend from the sill to a position in front of the A-pillar.

According to a further embodiment, said component is arranged behind the bracket. Hereby, when a crash load having a direction component in the longitudinal direction of the vehicle causes the bracket to be displaced backwards, energy can be transferred to the component.

According to a further embodiment, the bracket and said component are arranged adjacent to each other. Hereby, energy can be transferred substantially instantly when the bracket is hit.

According to a further embodiment, said component is a battery casing or a side collision protection for a battery, and preferably the bracket is arranged to transfer energy to a lateral outer portion of said component which outer portion extends longitudinally along a part of a side of the vehicle. Hereby, a suitable standard component or already existing component can be used for absorbing energy in a safe way.

According to a further embodiment, the arrangement has a guiding means maintaining the mutual position of the bracket and said component in case of a collision. Hereby, the amount of energy transferred to the component can be increased.

According to a further embodiment, the guiding means is arranged to counteract the bracket from moving to a position below said component in case of a collision, and preferably, the guiding means has a hooking part attached to the bracket, wherein the hooking part is arranged adjacent to an upward-facing surface of said component, whereby the bracket and said component are mechanically interconnected in case of impact. Hereby, in case the bracket is displaced backwards, a mutual position of the bracket and said component in the vertical direction can be maintained. At the same time, demounting of the component, such as the battery structure, is still possible without any additional measures.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1A is a schematic side view of a vehicle,
Fig. 1B is an enlarged part of Fig. 1A,
Fig. 2A is a schematic view showing the vehicle from below,
Fig. 2B is an enlarged part of Fig. 2A, and
Fig. 3 is a perspective view of a bracket of the vehicle.

### DETAILED DESCRIPTION OF EXAMPLE EMBODIMENTS

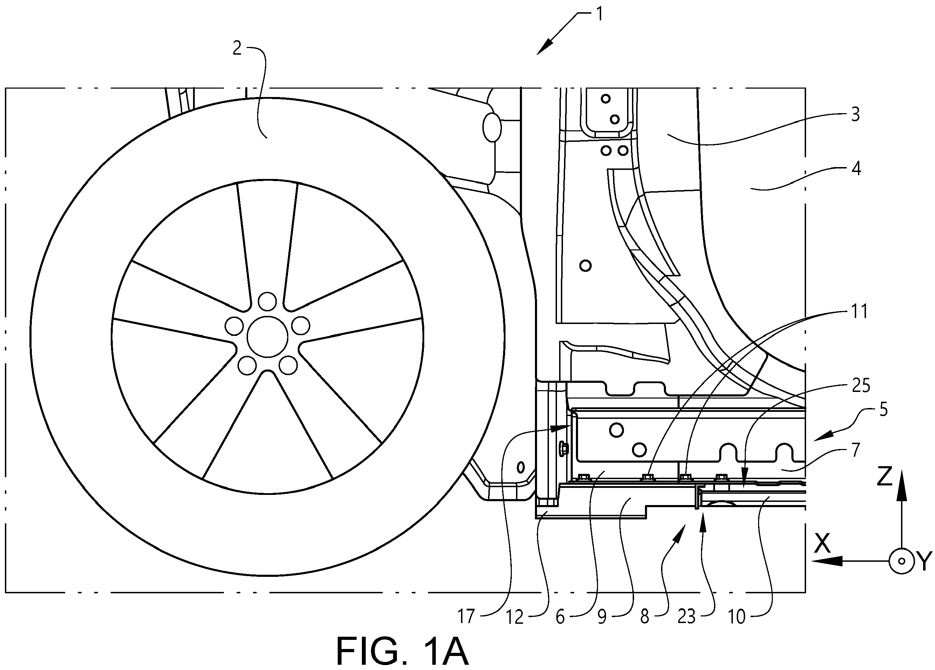

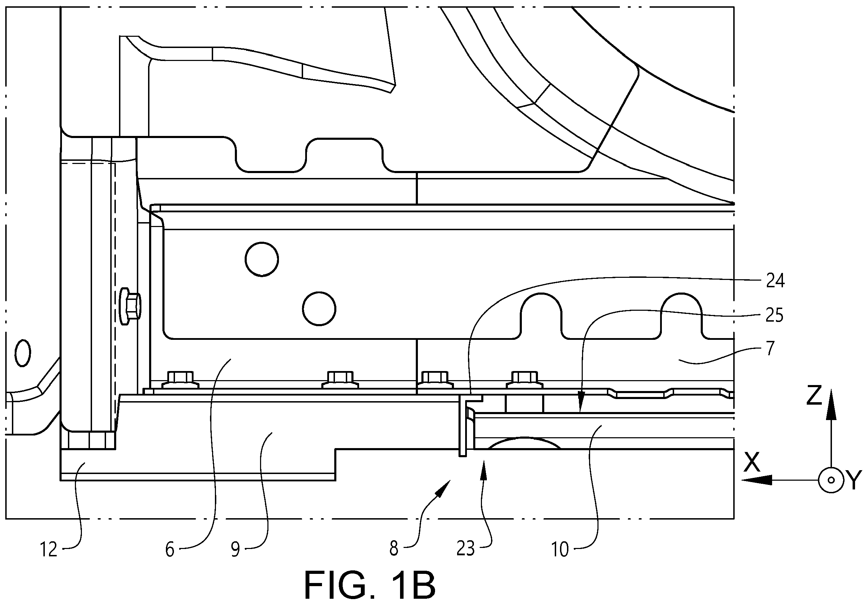

Fig. 1A is a schematic side view showing a part of a vehicle 1, and Fig. 1B is an enlarged part of the view in Fig. 1A.

In Fig. 1A also a cartesian coordinate system X, Y, Z, where all axes are orthogonal to each other, is introduced for facilitating the explanation of the vehicle. The directions and axes used in the cartesian coordinate system, i.e. the X-axis, Y-axis and the Z-axis, are arranged relative to the vehicle such that the X-axis is a horizontal axis in parallel with the longitudinal extension direction or normal driving direction of the vehicle, the Y-axis is a horizontal axis in parallel with the lateral extension of the vehicle, and the Z-axis is a vertical axis.

The vehicle 1 has a front wheel 2, an A-pillar 3, a passenger compartment 4 and a sill 5. The sill 5 can be made from two pieces; a front part 6 of a first material and a rear part 7 of a second material. The front part 6 can be a so called "gap eater" constituting an extension of the sill 5 for taking loads that otherwise would be instantly transferred to the A-pillar 3 in case of a frontal crash. The front part 6 is suitably made from a softer material than the rear part 7. Both the front part 6 and the rear part 7 of the sill 5 can be made from steel, aluminium or composite such as carbon fibre reinforced plastic (CFRP), for instance.

The vehicle 1 has an energy absorbing arrangement 8 which comprises a bracket 9 and a component 10 arranged on the underside of the vehicle 1. The bracket 9 is arranged to transfer energy to said component 10 in case of a collision. In the example embodiment illustrated in Fig. 1, the component 10 absorbing energy from the bracket 9 is a part of a battery structure arranged on the underside of the vehicle which component 10 can be attached to the sill 5.

The bracket 9 is attached to the sill 5, and suitably arranged in the front part of the sill 5 and on the underside of the sill 5, as shown in Fig. 1A. The bracket 9 can be made from a relatively soft material such as aluminium. The bracket 9 can be attached to the sill 5 by bolt joints 11. Preferably, the component 10 is arranged behind the bracket 9 in the longitudinal extension direction of the vehicle. The bracket 9 and the component 10 are arranged adjacent to each other, i.e. arranged with a small gap relative to each other or to abut each other (in the X-direction). In case the bracket is loaded and displaced backwards, any gap is eliminated and the bracket will abut to the component.

The bracket 9 is suitably arranged such that a front portion 12 of the bracket 9 is arranged in front of the sill 5 and such that the front portion 12 of the bracket 9 is arranged in front of the A-pillar 3. The bracket 9 is preferably arranged in a position below the A-pillar 3 in the vertical direction.

By the bracket 9, intrusion of a front wheel or the chassis into the passenger compartment 4 can be counteracted, since load from a collision can be transferred to the battery structure 10 and the sill 5, thereby increasing the load capacity of the entire structure in this area and lowering the force on the A-pillar 3.

For example, the component 10 can be a battery casing or a side collision protection for a battery or a combination thereof. The bracket 9 can advantageously be arranged to transfer energy to a lateral outer portion 13 of said component 10 which outer portion 13 extends longitudinally along a part of a side 14 of the vehicle.

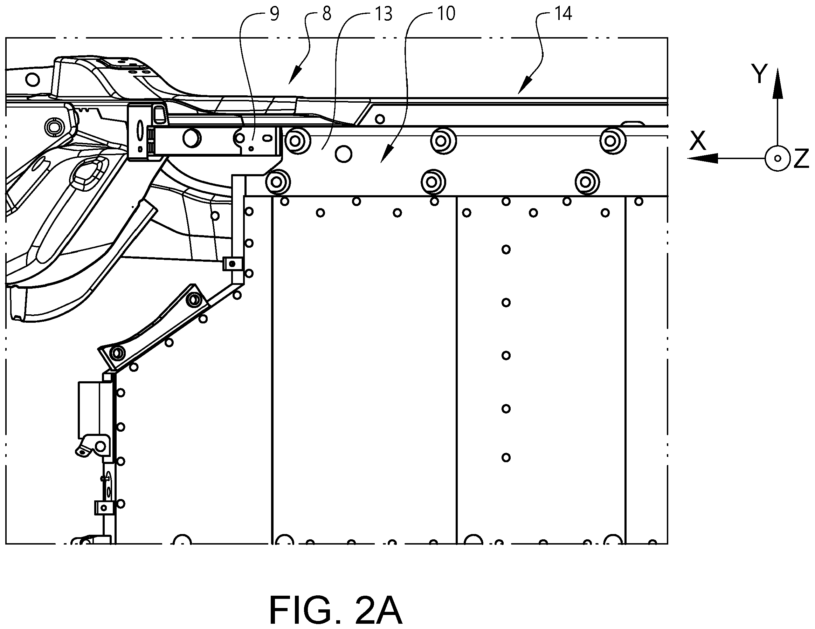

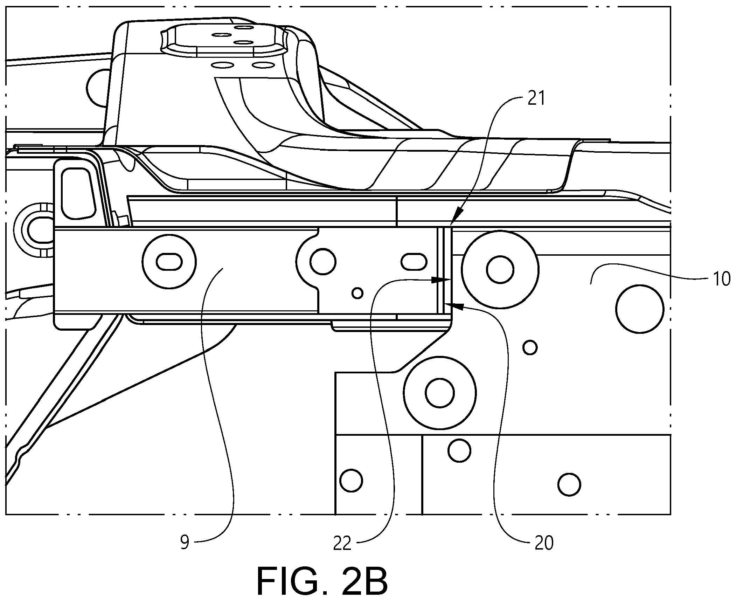

See also Figs. 2A and 2B showing the vehicle 1 comprising the energy absorbing arrangement 8 from below.

Hereby, the battery casing or the side collision protection can be used for absorbing energy at the same time as any battery cells arranged inside the battery casing in the centre of the vehicle can remain unaffected.

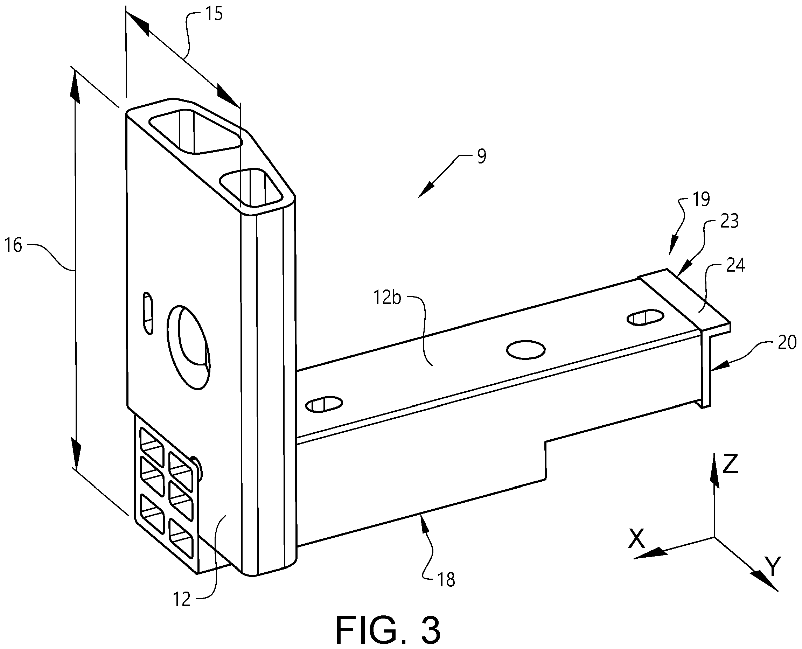

Fig. 3 shows the bracket 9 in a perspective view. The front portion 12 of the bracket 9 can extend in the vertical direction in front of the sill 5. The width 15 (along Y-axis) and height 16 (along Z-axis) and the position of the front portion 12 can be adapted to the dimensions and the position of the sill 5. The front portion 12 can be arranged to cover a front surface 17 of the sill 5. The front portion 12 of the bracket 9 can also cover the lower part of the A-pillar. See also Fig. 1A.

In addition to transfer force to the remaining part of the bracket 9 and further to the component 10, the front portion 12 will contribute to distribute force evenly over the cross section surface of the sill 5. Although the bracket 9 illustrated in Fig. 3 is made by the (vertical) front portion 12 and a (horizontal) rear portion 12b which are welded together, in another embodiment the bracket can be made in one piece, by moulding for instance.

The bracket 9 illustrated in Fig. 3 is a lifting bracket providing a surface 18 for a lifting equipment enabling the vehicle 1 to be lifted in a workshop. The lifting surface 18 is suitably directed downwards.

At a rear end 19 of the bracket 9, the bracket 9 has a rear surface 20 facing backwards in the X-direction. As shown in Fig. 2B, at a front end 21 of the component 10, the component 10 has a front surface 22 facing forward. The rear surface 20 of the bracket 9 and the front surface 22 of the component 10 are arranged to abut to each other for transferring energy from the bracket 9 to the component 10 in case of a collision.

Further, as shown in Figs. 1B and 3, the arrangement 8 has a guiding means 23 maintaining the mutual position of the bracket 9 and said component 10 in case of a collision. The guiding means 23 is arranged to counteract the bracket 9 from moving to a position below said component 10 in case of a collision. The guiding means 23 has a hooking part 24 attached to the bracket 9 at the rear end 19 of the bracket 9, preferably at the upper edge of the rear surface 20 of the bracket 9.

The hooking part 24 is arranged adjacent to the component, i.e. arranged with a small gap relative to an upward-facing surface 25 of said component or to abut an upward-facing surface 25 of the component (in the Z-direction), whereby the bracket 9 and said component 10 are mechanically interconnected such that a motion of the rear end 19 of the bracket 9 downwards in the vertical direction relative to the component 10 is prevented or at least counteracted. In other words; the guiding means 23 is arranged to keep the rear surface 20 of the bracket 9 and the front surface 22 of the component 10 in contact with each other when energy is transferred. Such a form fit connection between the bracket and the component is also favourable since demounting of the component from the vehicle is still possible without any additional measures.

It is to be understood that the present invention is not limited to the embodiments described above and illustrated in the drawings; rather, the skilled person will recognize that many changes and modifications may be made within the scope of the appended claims.

## Claims

1. A vehicle (1) having an energy absorbing arrangement (8), **characterized in that** the arrangement comprises a bracket (9) and a component (10) arranged on the underside of the vehicle, wherein the bracket (9) is arranged to transfer energy to said component (10) in case of a collision.

2. A vehicle according to claim 1, **characterized in that** the vehicle (1) comprises a sill (5) and the bracket (9) is attached to the sill.

3. A vehicle according to claim 2, **characterized in that** the bracket (9) is arranged in the front part of the sill (5).

4. A vehicle according to claim 2 or 3, **characterized in that** the bracket (9) is arranged on the underside of the sill (5).

5. A vehicle according to any of claims 2-4, **characterized in that** the bracket (9) is arranged such that a front portion (12) of the bracket (9) is arranged in front of the sill (5).

6. A vehicle according to any preceding claim, **characterized in that** the vehicle (1) has an A-pillar (3), and the bracket (9) is arranged such that a front portion (12) of the bracket (9) is arranged in front of the A-pillar (3).

7. A vehicle according to claim 6, **characterized in that** the bracket (9) is arranged in a position below the A-pillar (3).

8. A vehicle according to any preceding claim, **characterized in that** the bracket (9) is a lifting bracket providing a surface (18) for a lifting equipment enabling the vehicle (1) to be lifted in a workshop.

9. A vehicle according to any preceding claim, **characterized in that** said component (10) is arranged behind the bracket (9).

10. A vehicle according to any preceding claim, **characterized in that** the bracket (9) and said component (10) are arranged adjacent to each other.

11. A vehicle according to any preceding claim, **characterized in that** said component (10) is part of a battery structure.

12. A vehicle according to claim 11, **characterized in that** said component (10) is a battery casing or a side collision protection for a battery.

13. A vehicle according to claim 11 or 12, **characterized in that** the bracket (9) is arranged to transfer energy to a lateral outer portion (13) of said component (10) which outer portion (13) extends longitudinally along a part of a side (14) of the vehicle (14).

14. A vehicle according to any preceding claim, **characterized in that** the arrangement (8) has a guiding means (23) maintaining the mutual position of the bracket (9) and said component (10) in case of a collision.

15. A vehicle according to claim 14, **characterized in that** the guiding means (23) is arranged to counteract the bracket (9) from moving to a position below said component (10) in case of a collision.

16. A vehicle according to claim 14 or 15, **characterized in that** the guiding means (23) has a hooking part (24) attached to the bracket (9), the hooking part (24) being arranged adjacent to an upward-facing surface (25) of said component (10), whereby the bracket (9) and said component (10) are mechanically interconnected in case of impact.
